# EUROPÄISCHE PATENTSCHRIFT

(11) **EP 3 081 072 B1**
(45) Veröffentlichungstag und Bekanntmachung des Hinweises auf die Patenterteilung: **11.09.2019**
(21) Anmeldenummer: 16154955.5
(22) Anmeldetag: 10.02.2016
(51) Int. Cl.: A01F 15/07

(54) **VORRICHTUNG ZUM UMWICKELN VON ERNTEGUTBALLEN**
DEVICE FOR WRAPPING BALES OF HARVESTED AGRICULTURAL PRODUCE
DISPOSITIF D'ENROULEMENT DE BALLES DE MATÉRIAU DE RÉCOLTE

(30) Priorität: 08.04.2015 DE 102015004274
(43) Veröffentlichungstag der Anmeldung: 19.10.2016
(73) Patentinhaber: Usines Claas France S.A.S, 57140 St. Rémy / Woippy (FR)
(72) Erfinder: Cazaban-Mazerolles, Benoit, 57130 Sainte Ruffine (FR)
(74) Vertreter: CLAAS Gruppe

(56) Entgegenhaltungen:
- EP-A1- 0 865 722
- EP-A1- 1 502 493
- WO-A1-99/04612
- WO-A1-2006/093374
- KR-B1- 101 418 547

## Beschreibung

Die vorliegende Erfindung betrifft eine Vorrichtung zum Umwickeln von Erntegutballen, insbesondere zum Einsatz als Wickeleinheit an einer fahrbaren Ballenpresse.

Eine solche Vorrichtung ist aus EP 1 502 493 A1 bekannt. Sie umfasst einen Wickeltisch sowie einen Wickelmaterialspender, der auf einer Bahn um einen auf dem Wickeltisch aufliegenden Ballen herum beweglich ist, um den Ballen mit Wickelmaterial zu umhüllen. Um eine festsitzende Wicklung auf dem Ballen erzeugen zu können, sollte die Mitte einer auf den Ballen abzuwickelnden Bahn des Wickelmaterials mit der Mitte des Ballens selber übereinfallen. Um dies bei wechselnder Größe des Ballens erreichen zu können, ist der Wickeltisch der bekannten Vorrichtung an einem Rahmen über eine Steuerplatte abgestützt, die mit dem Wickeltisch und dem Rahmen jeweils über eine horizontale Achse schwenkbar verbunden ist. Wenn die Steuerplatte von einem daran angreifenden Stellzylinder um die am Rahmen feste Achse gedreht wird, wird die Achse, an der sie mit dem Wickeltisch verbunden ist, auf einer Kreisbahn um die am Rahmen feste Achse geführt, so dass jede Höhenkorrektur des auf dem Wickeltisch ruhenden Ballens mit einer horizontalen Bewegung des Ballens verbunden ist. Eine Zentrierung des Ballens auf den Mittelpunkt der Bahn des Wickelmaterialspenders kann daher nicht sichergestellt werden. Dies hat zur Folge, dass die Spannung der auf den Ballen aufgewickelten Bahn über dessen Umfang hinweg variiert, was wiederum den festen Sitz der Wicklung und deren Dichtigkeit beeinträchtigt.

Um ein freies Pendeln des Wickeltischs um die ihn mit der Steuerplatte verbindende Achse zu verhindern, ist ein zweites Stellglied mit dem Wickeltisch und dem Rahmen verbunden. Dessen Bewegung muss genau an die des ersten Stellgliedes gekoppelt sein, wenn ein Kippen des Wickeltischs während der Höhenverstellung vermieden werden soll.

Das Dokument EP 0865 722 A1 offenbart eine Vorrichtung zum Umwickeln von Erntegutballen nach dem Oberbegriff des Anspruchs 1.

Aufgabe der Erfindung ist, eine Vorrichtung zum Umwickeln von Erntegutballen zu schaffen, die eine exakte Positionierung des zu umwickelnden Ballens in Bezug auf einen Wickelmaterialspender mit einfachen Mitteln ermöglicht.

Die Aufgabe wird durch eine Vorrichtung zum Umwickeln von Erntegutballen nach dem Anspruch 1 gelöst.

Um eine solche Höhenverstellbarkeit des Ballens zu erreichen, genügt es, dass der Abstand der Tragrollen veränderbar ist. Die verschiedenen Positionen des Erntegutballens auf dem Wickeltisch sind dann durch Variieren des Abstands der Stützrollen voneinander realisierbar.

Um den Bereich, über den die Höhe des Ballens variiert werden kann, zu vergrößern, können die Tragrollen in Bezug auf den Rahmen höhenverstellbar sein.

Vorzugsweise wird die Höhenverstellbarkeit dadurch erreicht, dass jede Tragrolle mit dem Rahmen über wenigstens einen, vorzugsweise zwei Tragarme, verbunden ist, die um eine zur Drehachse der Rolle parallele Achse schwenkbar sind.

Um eine Höhenverstellung des Ballens ohne eine gleichzeitige Verlagerung in der Horizontalen bewirken zu können, sind die Arme der zwei Rollen vorzugsweise aneinander gekoppelt, um gegensinnig zu schwenken.

Zweckmäßigerweise sollten die Arme gleich lang sein, damit gleiche Drehwinkel beider Arme gleiche Höhenverstellungen der von ihnen getragenen Rollen bewirken.

Die Arme sollten in jeder Stellung, die sie einnehmen können, spiegelbildlich zueinander gegen eine vertikale Mittelebene des Wickeltischs geneigt sein.

Um einen kompakten Aufbau des Wickeltischs zu erhalten, sollten die Schwenkachsen der Arme näher zu der Mittelebene des Wickeltischs benachbart sein als die Drehachsen der von ihnen getragenen Rollen. Um die Schwenkbewegung der Tragarme anzutreiben, kann wenigstens ein Tragarm jeder Tragrolle einen Zahnkranz aufweisen, und die Zahnkränze können mit aneinander gekoppelten Schnecken oder mit einer gemeinsamen Schnecke kämmen.

Der Wickeltisch ist erfindungsgemäß an einem Fahrgestell, insbesondere dem Fahrgestell einer fahrbaren Ballenpresse, um eine Achse schwenkbar aufgehängt, um das Aufladen eines zu umwickelnden Ballens auf den Wickeltisch und/oder das Ablegen eines umwickelten Ballens zu erleichtern.

Mit Hilfe eines Kraftmesssensors, der eine auf die Achse wirkende Last erfasst, kann das Gewicht des Ballens ermittelt werden.

Ein solcher Kraftmesssensor kann zweckmäßigerweise mit einer Steuereinheit verbunden sein, die eine solche Größenabschätzung vornimmt.

Des Weiteren kann ein Stellglied mit dem Rahmen und dem Fahrgestell verbunden sein, um die Schwenkbewegung des Rahmens bzw. des Wickeltischs bei Aufnahme und/oder Abgabe eines Ballens anzutreiben.

Auch an einem solchen Stellglied kann ein Kraftmesssensor zum Erfassen einer auf das Stellglied wirkenden Last vorgesehen sein.

Die Steuereinheit ist zweckmäßigerweise eingerichtet, die Stellung der Tragrolle relativ zum Rahmen umso höher einzustellen, je kleiner der Ballen ist. Indem auf diese Weise ein kleiner Ballen in höherer Position abgestützt wird als ein großer, kann der Mittelpunkt bei beiden Ballen in gleicher Höhe, passend zentriert zum vom Wickelmaterialspender abgegebenen Wickelmaterial, positioniert werden.

Wenigstens eine der Tragrollen sollte drehangetrieben sein, um den Erntegutballen um seine Achse zu rotieren, während der Wickelmaterialspender zum Umwickeln des Ballens um den Ballen herum bewegt wird.

Die Steuereinheit kann die Größe des Ballens auch während des Umwickelns selber berücksichtigen. Da der Winkel, um den die Tragrollen rotieren müssen, um den Ballen einmal um seine Achse zu drehen, umso kleiner ist, je kleiner der Ballen ist, kann die Steuereinheit den während des Umwickelns eines Ballens zurückgelegten Drehwinkel der Tragrollen umso kleiner einstellen, je kleiner der Ballen ist. So wird jeder Ballen unabhängig von seiner Größe mit Wickelmaterial in angemessener Menge umhüllt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Schnittdarstellung einer Ballenpresse mit einer erfindungsgemäßen Wickelvorrichtung;
- Fig. 2: eine perspektivische Ansicht des Wickeltischs der Wickelvorrichtung aus Fig. 1;
- Fig. 3: eine zweite perspektivische Ansicht des Wickeltischs;
- Fig. 4: eine Detailansicht des Wickeltischs, die dessen Aufhängung am Fahrgestell der Ballenpresse verdeutlicht; und
- Fig. 5 und 6: Seitenansichten der Wickelvorrichtung, bei denen unterschiedlich große Ballen auf den Wickeltisch geladen sind.

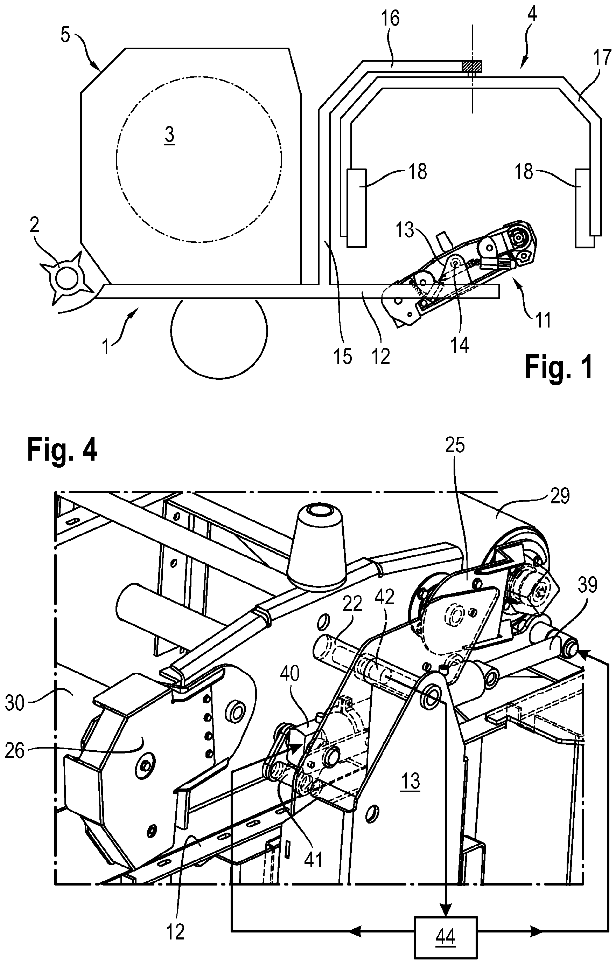

Fig. 1 zeigt eine Ballenpresse mit einer Wickelvorrichtung gemäß der vorliegenden Erfindung in einem schematischen Schnitt. Auf einem an eine Zugmaschine anzukoppelnden Fahrgestell 1 sind von vorne nach hinten aufeinander folgend eine Erntegut-Aufnahme- und -Zerkleinerungsvorrichtung 2, eine Presskammer 3 und eine Ballenwickelvorrichtung 4 angeordnet. Ein Gehäuse 5 umfasst die Presskammer 3, welche eine variable Presskammer 3 sein kann.

Eine Ballenwickelvorrichtung 4 umfasst einen Wickeltisch 11, der zwischen zwei Längsträgern 12 des Fahrgestells 1 (von denen in der Figur nur einer sichtbar ist) über einen Lagerbock 13 und eine Achse 14 schwenkbar aufgehängt ist. Von den beiden Längsträgern 12 ragt unmittelbar hinter der Presskammer 3 jeweils eine Säule 15 auf, und die beiden Säulen 15 sind an ihren oberen Enden durch einen in der Draufsicht U-förmigen Querbalken 16 verbunden. An dem Querbalken 16 ist mittig ein um eine vertikale Achse drehbarer Bogen 17 aufgehängt. An den Enden des Bogens 17 ist jeweils eine Vorratsrolle 18 aufgehängt, von der ein bandförmiges Wickelmaterial, typischerweise eine Kunststofffolie, ab- und um einen auf dem Wickeltisch 11 ruhenden Ballen herumgewickelt wird, wenn der Bogen 17 um die vertikale Achse in Drehung versetzt wird.

Eine elektronische Steuereinheit, die den Füllungsgrad der Presskammer 3 überwacht und die das Öffnen der Presskammer 3 steuert, wenn der darin gebildete Ballen eine Sollgröße erreicht hat, ist auch mit einem Motor des Bogens 17 verbunden, um diesen während der Ballenausgabe in einer zur in Fig. 1 gezeigten Orientierung um 90° gedrehte Orientierung zu positionieren, in der er der Bewegung des Ballens zum Wickeltisch 11 nicht im Wege ist.

Der Wickeltisch 11 ist in Fig. 1 in einer Stellung mit abgesenkter vorderer Kante gezeigt, die er, ebenfalls unter der Kontrolle der Steuereinheit, während der Ausgabe des Ballens einnimmt, um diesem das Erreichen des Wickeltischs 11 zu erleichtern.

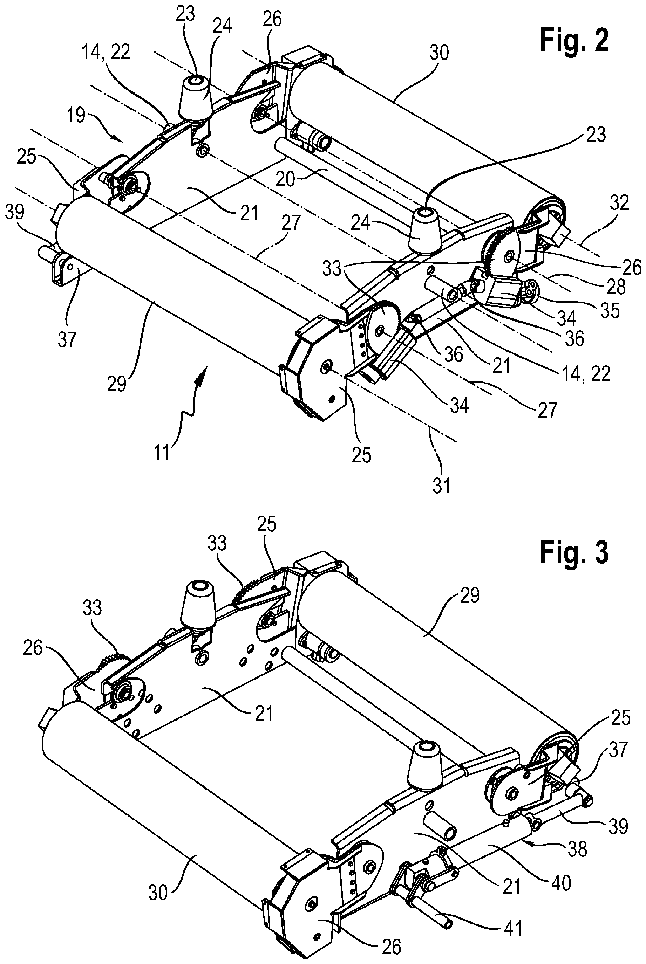

Fig. 2 zeigt den Wickeltisch 11 in einer ersten perspektivischen Ansicht. Ein Rahmen 19 des Wickeltischs 11 umfasst zwei starr, zum Beispiel über eine Querstrebe 20, miteinander verbundene Seitenwandplatten 21. Die Achse 14 ist hier durch zwei Achszapfen 22 gebildet, die koaxial zueinander von den beiden Seitenwandplatten 21 nach außen abstehen.

Die Oberkanten der Seitenwandplatten 21 tragen jeweils einen vertikal aufragenden Achszapfen 23, an dem eine Rolle 24 gelagert ist. Die Rollen 24 sind vorgesehen, um während des Umwickelns eines Ballens eine Seitwärtsdrift des Ballens zu blockieren, die eventuell aus einer leicht kegeligen Gestalt des Ballens resultieren könnte. Die Achszapfen 23 und die Achse 14 spannen eine vertikale Mittelebene auf, in Bezug auf die der Wickeltisch 11 weitgehend symmetrisch ist. An den Enden jeder Seitenwandplatte 21 sind Tragarme 25, 26 um zu der Mittelebene parallele, horizontale Achsen 27, 28 schwenkbar angelenkt. Die Tragarme 25 tragen eine vordere Tragrolle 29, die Tragarme 26 eine hintere Tragrolle 30. Die Länge der Tragarme 25, 26, genauer gesagt der Abstand zwischen ihrer Schwenkachse 27 bzw. 28 und einer Drehachse 31 bzw. 32 der von dem betreffenden Tragarm gehaltenen Tragrolle 29, 30 ist identisch.

Die Tragarme 25, 26 an der in Fig. 2 dem Betrachter zugewandten Seitenwandplatte 21 sind jeweils mit einem zu der Achse 27 bzw. 28 konzentrischen Zahnkranz 33 versehen, der mit einem Schneckengetriebe kämmt, das in einem der Außenseite der Seitenwandplatte 21 befestigten Gehäuse 34 verborgen ist. Eines der Gehäuse 34 trägt an seinem vom Betrachter abgewandten Ende einen Motor 35, der die Schnecke im Inneren des Gehäuses 34 sowie, hier über zwei Kardangelenke 36 gekoppelt, die Schnecke des anderen Gehäuses 34 antreibt. Die Schnecken haben jeweils entgegengesetzte Händigkeit, um gekoppelte Drehungen der Tragarme 25, 26 mit jeweils entgegengesetztem Drehsinn aber gleicher Winkelamplitude anzutreiben.

Fig. 2 zeigt die Tragarme 25, 26 in horizontaler Stellung, in der alle Achsen 27, 28, 31, 32 in einer gleichen Ebene liegen und der Abstand zwischen den Tragrollen 29, 30 maximal ist. Diese Stellung kann gleichzeitig eine Anschlagstellung sein, in der die Bewegungsfreiheit der Tragarme 25, 26 nach unten durch Aufliegen eines Tragarms 25 auf einem Anschlagvorsprung 37 der vom Betrachter abgewandten Seitenwandplatte 21 begrenzt ist. Die Schwenkbewegungsfreiheit der Tragarme 25, 26 kann wenigstens bis in eine vertikale Stellung reichen, in der die Drehachse 31 bzw. 32 eines Tragarms 25 bzw. 26 jeweils vertikal über seiner Schwenkachse 27 bzw. 28 liegt. Eine Annäherung der Tragrollen 29, 30 über diese vertikale Stellung hinaus ist zweckmäßigerweise gesperrt, da durch eine solche Annäherung allenfalls die Auflagefläche des Ballens auf dem Wickeltisch 11 verkleinert und damit die Stabilität des Wickelvorgangs verringert wird, aber keine Anhebung des Ballens mehr erreichbar ist.

Fig. 3 zeigt den Wickeltisch 11 in einer zweiten perspektivischen Ansicht, aus zur Blickrichtung der Fig. 2 entgegengesetzter Richtung. An der nun dem Betrachter zugewandten Seitenwandplatte 21 fehlen die Zahnkränze 33 und Getriebegehäuse 34, stattdessen ist der Platz vor der Seitenwandplatte 21 hier von einem hydraulischen Stellglied 38 belegt, dessen Kolbenstange 39 an der Spitze des Anschlagvorsprungs 37 angelenkt ist und dessen Zylinder 40 über eine Welle 41 an das in der Figur nicht gezeigte Fahrgestell 1 angelenkt ist. Durch Einziehen oder Ausfahren der Kolbenstange 39 schwenkt das Stellglied 38 den Wickeltisch 11 aus einer horizontalen Ruhe- und Wickelbetriebsstellung einerseits in die Aufnahmestellung der Fig. 1, andererseits in eine Ausgabestellung mit abgesenkter hinterer Rolle 30, in der ein fertig umwickelter Ballen vom Wickeltisch 11 herunterfallen kann.

Fig. 4 veranschaulicht die Aufhängung des Wickeltischs 11 am Fahrgestell 1. Gezeigt ist ein kurzes Stück eines der beiden Längsträger 12 des Fahrgestells und der davon aufragende Lagerbock 13. Der Achszapfen 22 greift in eine Aufnahme an der Spitze des Lagerbocks 13 drehbar ein. Durch das Eigengewicht des Wickeltischs 11 und das Gewicht eines darauf ruhenden Ballens ist der Achszapfen 22 einer Scherbelastung ausgesetzt, die von einem in den Achszapfen 22 eingefügten Sensor 42 erfasst und an die hier mit 44 bezeichnete Steuereinheit übermittelt wird.

In eine weitere Aufnahme am Fuß des Lagerbocks 13 ist die Welle 41 eingesteckt. Wenn der Wickeltisch 11 in horizontaler Stellung im Gleichgewicht ist, ist die Welle 41 unbelastet. In der geschwenkten Stellung der Fig. 1 wirkt auf die Welle 41 eine Scherbelastung, die ebenfalls vom Eigengewicht des Wickeltischs 11 und eines darauf geladenen Ballens abhängt. Um das Gewicht des Ballens zu ermitteln, kann daher anstelle des Sensors 42 oder ergänzend zu diesem ein Kraftsensor auch in die Welle 41 integriert sein, oder ein Drucksensor kann mit dem Zylinder 40 verbunden sein, um der Steuereinheit 44 anhand des darin herrschenden Drucks die Ermittlung des Gewichts des Ballens zu ermöglichen.

Wenn ein neuer Ballen aus der Presskammer 3 auf den Wickeltisch 11 umgeladen worden ist, berechnet die Steuereinheit 44 anhand der Daten des Sensors 42 das Gewicht des Ballens. Der Durchmesser des Ballens ist von der Presse bekannt und kann voreingestellt sein. Die Steuereinheit 11 schwenkt den Wickeltisch 11 in die Horizontale und schwenkt die Tragarme 25, 26 in eine Stellung, in der der Mittelpunkt eines Ballens mit dem Durchmesser genau auf halber Höhe der Vorratsrollen 18 zu liegen kommt. Ein Verschwenken der Tragarme 25, 26 kann vor einer Aufnahme eines Ballens erfolgen.

Da die Tragarme 25, 26 sich beim Schwenken spiegelbildlich zueinander bewegen, befinden sich die Linien, entlang derer der Ballen auf den Tragrollen 29, 30 aufliegt, in horizontaler Stellung des Wickeltischs 11 in gleicher Höhe, und der Ballen wird exakt vertikal bewegt, wobei seine Achse stets in der Mittelebene des Wickeltischs 11 liegt.

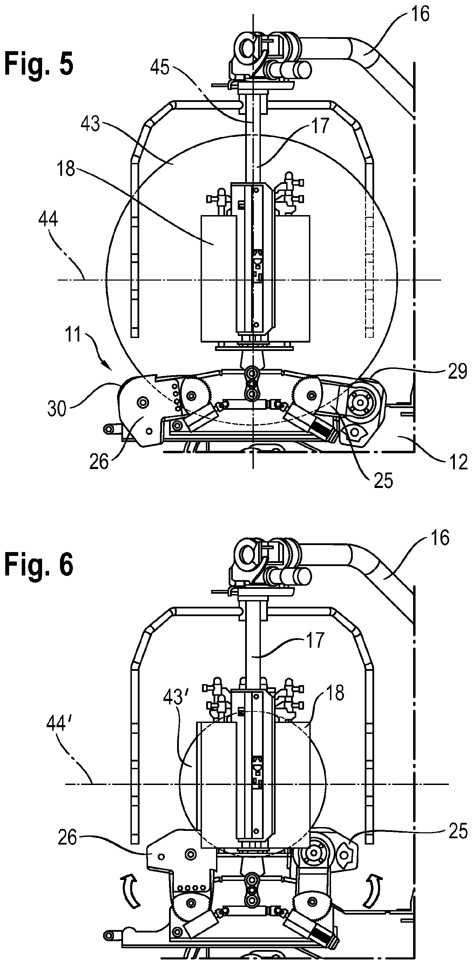

Fig. 5 zeigt in einer Seitenansicht den Wickeltisch 11 mit horizontal nach außen geschwenkten Tragarmen 25, 26. Der Abstand zwischen den Tragrollen 29, 30 ist in dieser Stellung maximal, so dass ein Ballen 43 mit großem Durchmesser auf den Tragrollen 29, 30 sicher aufliegt. Eine Äquatorialebene 44 des Ballens verläuft mittig durch die Vorratsrollen 18. Die Achse des Ballens 43 verläuft entlang der Kreuzung zwischen der Äquatorialebene 44 und der hier mit 45 bezeichneten Mittelebene des Wickeltischs 11. Die Drehachse des Bogens 17 verläuft in der Mittelebene 45.

Wenn nach dem Aufladen des Ballens 43 und Schwenken des Wickeltischs 11 in die Horizontale der Bogen 17 von der Steuereinheit 44 in Drehung versetzt wird, um Wickelmaterial von den Vorratsrollen 18 um den Ballen 43 zu wickeln, gleichen sich aufgrund der exakten Höhenanpassung von Vorratsrollen 18 und Ballen 43 aufwärts und abwärts wirkende Spannungskräfte in der um den Ballen 43 gewickelten Bahn einander aus, so dass sich die Bahn symmetrisch beiderseits der Äquatorialebene 44 um den Ballen 43 herumlegt und ein Abrutschen der Bahn nach oben oder unten verhindert wird.

Fig. 6 zeigt den Wickeltisch 11, beladen mit einem Ballen 43' von geringem Gewicht. Basierend auf der Durchmesserschätzung hat die Steuereinheit 44 die Tragarme 25, 26 aufwärts, hier bis in eine vertikale Stellung, geschwenkt, so dass die Äquatorialebene 44' des kleinen Ballens 43' auf gleicher Höhe wie die des Ballens 43 aus Fig. 5 zu liegen kommt. So ist auch hier eine gleichmäßige Umwicklung des Ballens 43' gewährleistet, ohne dass das Wickelmaterial während der Rotation des Bogens 17 nach oben oder nach unten abdriftet.

Infolge des kleineren Umfangs wird bei dem Ballen 43' deutlich weniger Wickelmaterial benötigt, um eine dichte, strapazierfähige Hülle zu bilden, als im Falle des großen Ballens 43. Die Steuereinheit 44 kann dem Rechnung tragen, indem sie den Drehwinkel, um den die Rollen 29, 30 während des Umwickelns eines Ballens gedreht werden, in einem festen Verhältnis proportional zum geschätzten Durchmesser des Ballens wählt. So ist die Zahl der Umdrehungen um die eigene Achse, die ein Ballen 43 oder 43' während eines Wickelvorgangs vollführt, unabhängig von seinem Radius die gleiche, und die Zahl der Hüllmaterialschichten, die an einem gegebenen Punkt des Umfangs des Ballens übereinander zu liegen kommen, bevor am Ende des Wickelvorgangs die Bahn automatisch gekappt wird, ist vom Umfang unabhängig.

### Bezugszeichen

- 1: Fahrgestell
- 2: Erntegut-Aufnahmevorrichtung
- 3: Presskammer
- 4: Ballenwickelvorrichtung
- 5: Gehäuse
- 11: Wickeltisch
- 12: Längsträger
- 13: Lagerbock
- 14: Achse
- 15: Säule
- 16: Querbalken
- 17: Bogen
- 18: Vorratsrolle
- 19: Rahmen
- 20: Querstrebe
- 21: Seitenwandplatte
- 22: Achszapfen
- 23: Achszapfen
- 24: Rolle
- 25: Tragarm
- 26: Tragarm
- 27: Achse
- 28: Achse
- 29: Tragrolle
- 30: Tragrolle
- 31: Drehachse
- 32: Drehachse
- 33: Zahnkranz
- 34: Gehäuse
- 35: Motor
- 36: Kardangelenk
- 37: Anschlagvorsprung
- 38: hydraulisches Stellglied
- 39: Kolbenstange
- 40: Zylinder
- 41: Welle
- 42: Sensor
- 43: Ballen
- 44: Steuereinheit

## Patentansprüche

1. Vorrichtung (4) zum Umwickeln von Erntegutballen (43, 43'), mit einem Wickeltisch (11), der einen Rahmen (19) und zwei über den Rahmen (19) gehaltene Tragrollen (29, 30) zum Unterstützen eines Erntegutballens (43, 43') aufweist, und wenigstens einem Wickelmaterialspender (18), der auf einer Bahn um den von den Tragrollen (29, 30) unterstützten Erntegutballen (43, 43') geführt ist, wobei der Erntegutballen (43, 43') auf dem Wickeltisch (11) in Bezug auf den Rahmen (19) in verschiedenen, insbesondere rein, vertikal beabstandeten Positionen unterstützbar ist, **dadurch gekennzeichnet, dass** der Wickeltisch (11) an einem Fahrgestell (1) um eine Achse (14) schwenkbar aufgehängt ist.

2. Vorrichtung nach Anspruch 1, **dadurch gekennzeichnet, dass** der Abstand der Tragrollen (29. 30) veränderbar ist und die verschiedenen Positionen des Erntegutballens (43, 43') auf dem Wickeltisch (11) sich durch den Abstand der Stützrollen (29, 30) voneinander unterscheiden.

3. Vorrichtung nach Anspruch 1 oder 2, **dadurch gekennzeichnet, dass** die Tragrollen (29, 30) in Bezug auf den Rahmen (19) höhenverstellbar sind.

4. Vorrichtung nach Anspruch 2 oder 3, **dadurch gekennzeichnet, dass** jede Tragrolle (29, 30) mit dem Rahmen (19) über wenigstens einen Tragarm (25, 26) verbunden ist, der um eine zur Drehachse (31, 32) der Rolle (29, 30) parallele Achse (27, 28) schwenkbar ist.

5. Vorrichtung nach Anspruch 4, **dadurch gekennzeichnet, dass** die Tragarme (25, 26) der zwei Tragrollen (29, 30) aneinander gekoppelt sind, um gegensinnig zu schwenken.

6. Vorrichtung nach Anspruch 4 oder 5, **dadurch gekennzeichnet, dass** die Schwenkachsen (27, 28) der Tragarme (25, 26) näher zu einer Mittelebene (45) des Wickeltischs (11) benachbart sind als die Drehachsen (31, 32) der von ihnen getragenen Rollen (29, 30).

7. Vorrichtung nach einem der Ansprüche 4 bis 6, **dadurch gekennzeichnet, dass** wenigstens ein Tragarm (25, 26) jeder Tragrolle (29, 30) einen Zahnkranz (33) aufweist und dass die Zahnkränze (33) mit aneinander gekoppelten Schnecken kämmen.

8. Vorrichtung nach Anspruch 1, **gekennzeichnet durch** einen Kraftmesssensor (42) zum Erfassen einer auf die Achse (14) wirkenden Last.

9. Vorrichtung nach Anspruch 1 oder 8, **dadurch gekennzeichnet, dass** ein Stellglied (38) zum Schwenken des Wickeltischs (11) mit dem Wickeltisch (11) und dem Fahrgestell (1) verbunden ist.

10. Vorrichtung nach Anspruch 11, **gekennzeichnet durch** einen Kraftmesssensor zum Erfassen einer auf das Stellglied (38) wirkenden Last.

11. Vorrichtung nach einem der Ansprüche 8 bis 10, **gekennzeichnet durch** eine Steuereinheit (44), die mit wenigstens einem Sensor (42) verbunden ist.

12. Vorrichtung nach Anspruch 11, **dadurch gekennzeichnet, dass** die Steuereinheit (44) eingerichtet ist, die Stellung der Tragrollen (29, 30) relativ zum Rahmen (19) um so höher einzustellen, je kleiner der Ballen (43, 43') ist.

13. Vorrichtung nach einem der vorhergehenden Ansprüche, **dadurch gekennzeichnet, dass** wenigstens eine der Tragrollen (29, 30) drehangetrieben ist, um den Erntegutballen (43, 43') um seine Achse zu rotieren.

14. Vorrichtung nach Anspruch 11 oder 12 und Anspruch 13, **dadurch gekennzeichnet, dass** die Steuereinheit (44) eingerichtet ist, den von den Tragrollen (29, 30) während des Umwickelns eines Ballens (43, 43') zurückgelegten Drehwinkel um so kleiner einzustellen, je kleiner der Ballen (43, 43') ist.

## Claims

1. A device (4) for wrapping crop bales (43, 43'), having a wrapping table (11) which comprises a frame (19) and two support rollers (29, 30) held by the frame (19) to support a crop bale (43, 43'), and at least one wrapping material dispenser (18) which is guided in a path around the crop bale (43, 43') supported by the support rollers (29, 30), wherein the crop bale (43, 43') can be supported on the wrapping table (11) in different positions with respect to the frame (19), in particular in separate purely vertical positions, **characterized in that** the wrapping table (11) is pivotably suspended on a chassis (1) about an axis (14).

2. The device according to claim 1, **characterized in that** the separation of the support rollers (29, 30) can be varied and the different positions of the crop bale (43, 43') on the wrapping table (11) differ in the separation of the supporting rollers (29, 30) from each other.

3. The device according to claim 1 or claim 2, **characterized in that** the height of the support rollers (29, 30) with respect to the frame (19) can be adjusted.

4. The device according to claim 2 or claim 3, **characterized in that** each support roller (29, 30) is connected to the frame (19) via at least one support arm (25, 26) which is pivotable about an axis (27, 28) which is parallel to the axis of rotation (31, 32) of the roller (29, 30).

5. The device according to claim 4, **characterized in that** the support arms (25, 26) of the two support rollers (29, 30) are coupled together so that they pivot in opposite directions.

6. The device according to claim 4 or claim 5, **characterized in that** the pivotal axes (27, 28) of the support arms (25, 26) are closer to a central plane (45) of the wrapping table (11) than the rotational axes (31, 32) of the rollers (29, 30) carried by them.

7. The device according to one of claims 4 to 6, **characterized in that** at least one support arm (25, 26) of each support roller (29, 30) is provided with a gear rim (33) and **in that** the gear rim (33) meshes with worms which are coupled together.

8. The device according to claim 1, **characterized by** a load sensor (42) for detecting a load acting on the axis (14).

9. The device according to claim 1 or claim 8, **characterized in that** an actuator (38) is connected to the wrapping table (11) and the chassis (1) in order to pivot the wrapping table (11).

10. The device according to claim 11, **characterized by** a load sensor for detecting a load acting on the actuator (38).

11. The device according to one of claims 8 to 10, **characterized by** a control unit (44) which is connected to at least one sensor (42).

12. The device according to claim 11, **characterized in that** the control unit (44) is configured in a manner such that the position of the support rollers (29, 30) relative to the frame (19) is adjusted to be higher the smaller the bale (43, 43') is.

13. The device according to one of the preceding claims, **characterized in that** at least one of the support rollers (29, 30) is driven in rotation in order to rotate the crop bale (43, 43') about its axis.

14. The device according to claim 11 or claim 12 or claim 13, **characterized in that** the control unit (44) is configured in a manner such that the rotational angle through which the support rollers (29, 30) travel during wrapping of a bale (43, 43') is adjusted to be smaller the smaller the bale (43, 43') is.

## Revendications

1. Dispositif (4) pour enrubanner des balles de produit récolté (43, 43'), comprenant une table d'enrubannage (11), qui comporte un cadre (19) et deux rouleaux porteurs (29, 30) maintenus par l'intermédiaire du cadre (19) pour soutenir une balle de produit récolté (43, 43'), et comprenant au moins un distributeur de matériau d'enrubannage (18) qui est guidé sur une trajectoire autour de la balle de produit récolté (43, 43') soutenue par les rouleaux porteurs (29, 30), la balle de produit récolté (43, 43') pouvant être soutenue dans différentes positions, en particulier seulement, espacées verticalement, par rapport au cadre (19) sur la table d'enrubannage (11), **caractérisé en ce que** la table d'enrubannage (11) est suspendue sur un châssis (1) de manière pivotante autour d'un axe (14) .

2. Dispositif selon la revendication 1, **caractérisé en ce que** l'écartement des rouleaux porteurs (29, 30) est modifiable et les différentes positions de la balle de produit récolté (43, 43') sur la table d'enrubannage (11) se différencient les unes des autres par l'écartement des rouleaux d'appui (29, 30).

3. Dispositif selon la revendication 1 ou 2, **caractérisé en ce que** les rouleaux porteurs (29, 30) sont réglables en hauteur par rapport au cadre (19).

4. Dispositif selon la revendication 2 ou 3, **caractérisé en ce que** chaque rouleau porteur (29, 30) est relié au cadre (19) par l'intermédiaire d'au moins un bras porteur (25, 26) qui peut pivoter autour d'un axe (27, 28) parallèle à l'axe de rotation (31, 32) du rouleau (29, 30).

5. Dispositif selon la revendication 4, **caractérisé en ce que** les bras porteurs (25, 26) des deux rouleaux porteurs (29, 30) sont couplés l'un à l'autre pour pivoter en sens contraires.

6. Dispositif selon la revendication 4 ou 5, **caractérisé en ce que** les axes de pivotement (27, 28) des bras porteurs (25, 26) sont plus proches d'un plan médian (45) de la table d'enrubannage (11) que les axes de rotation (31, 32) des rouleaux (29, 30) portés par ceux-ci.

7. Dispositif selon une des revendications 4 à 6, **caractérisé en ce qu'**au moins un bras porteur (25, 26) de chaque rouleau porteur (29, 30) comporte une couronne dentée (33), et **en ce que** les couronnes dentées (33) s'engrènent avec des vis sans fin couplées entre elles.

8. Dispositif selon la revendication 1, **caractérisé par** un capteur d'effort (42) pour détecter une charge agissant sur l'axe (14).

9. Dispositif selon la revendication 1 ou 8, **caractérisé en ce qu'**un actionneur (38) est relié à la table d'enrubannage (11) et au châssis (1) pour faire pivoter la table d'enrubannage (11).

10. Dispositif selon la revendication 11, **caractérisé par** un capteur d'effort pour détecter une charge agissant sur l'actionneur (38).

11. Dispositif selon une des revendications 8 à 10, **caractérisé par** une unité de commande (44) qui est connectée à au moins un capteur (42).

12. Dispositif selon la revendication 11, **caractérisé en ce que** l'unité de commande (44) est agencée pour régler la position des rouleaux porteurs (29, 30) par rapport au cadre (19) d'autant plus haut que la balle (43, 43') est petite.

13. Dispositif selon une des revendications précédentes, **caractérisé en ce qu'**au moins un des rouleaux porteurs (29, 30) est entraîné en rotation afin de faire tourner la balle de produit récolté (43, 43') autour de son axe.

14. Dispositif selon la revendication 11 ou 12 et la revendication 13, **caractérisé en ce que** l'unité de commande (44) est agencée pour donner à l'angle de rotation parcouru par les rouleaux porteurs (29, 30) pendant l'enrubannage d'une balle (43, 43') une valeur d'autant plus petite que la balle est petite (43, 43').
